# EUROPÄISCHE PATENTSCHRIFT

(11) **EP 0 567 778 B1**
(45) Veröffentlichungstag und Bekanntmachung des Hinweises auf die Patenterteilung: **29.01.1997**
(21) Anmeldenummer: 93104877.1
(22) Anmeldetag: 24.03.1993
(51) Int. Cl.: F16H 61/46, B60K 17/10

(54) **Hydrostatisches Getriebe**
Hydrostatic transmission
Transmission hydrostatique

(30) Priorität: 27.04.1992 DE 4213799
(43) Veröffentlichungstag der Anmeldung: 03.11.1993
(60) Teilanmeldung: 96110331.4
(73) Patentinhaber: BRUENINGHAUS HYDROMATIK GMBH, D-72160 Horb (DE)
(72) Erfinder: Vogl, Karl-Heinz, W-7240 Horb-Nordstetten (DE); Belser, Roland, W-7452 Haigerloch (DE)
(74) Vertreter: Körber, Wolfhart, Dr.rer.nat.

(56) Entgegenhaltungen:
- EP-A- 0 226 844
- DE-A- 2 836 697
- DE-A- 3 400 885
- US-A- 4 478 041

## Beschreibung

Die Erfindung betrifft ein hydrostatisches Getriebe.

Aus der US-A 4 478 041 ist ein hydrostatisches Getriebe mit einer Pumpe und einem Verstellmotor bekannt, dessen Schluckvolumen in Abhängigkeit von dem von ihm aufgenommenen Volumenstrom geregelt wird. Die Größe dieses Volumenstroms wird mit Hilfe einer Drossel erfaßt, die in einer der an den Verstellmotor angeschlossenen Druckmittelleitungen angeordnet ist. Der Druckabfall dieser Drossel wird als Differenzdruck der Regelvorrichtung zugeführt, die einen dem Druckabfall proportionalen Stelldruck erzeugt und mit diesem einen Stellzylinder zum Verstellen des Schluckvolumens des Verstellmotors beaufschlagt. Die Regelvorrichtung beinhaltet eine Umschaltfunktion, die dafür sorgt, daß unabhängig von der Richtung des Druckabfalls der Stellzylinder stets, d.h. sowohl im Lastbetrieb, also wenn die Pumpe den Verstellmotor antreibt, als auch im Schubbetrieb, wenn der Verstellmotor etwa bei Bergabfahrt den Antrieb der Pumpe übernimmt, in Richtung einer Verringerung des Schluckvolumens des Verstellmotors und damit einer entsprechenden Verringerung des Übersetzungsverhältnisses des hydrostatischen Getriebes beaufschlagt ist. Im Schubbetrieb bedeutet die Verringerung des Übersetzungsverhältnisses eine Verringerung der in diesem Betriebszustand erwünschten hydraulischen Bremswirkung des hydrostatischen Getriebes.

Ein weiteres hydrostatisches Getriebe ist aus der EP-PS 0226 844 bekannt. Es ist als Fahrantrieb für ein Fahrzeug ausgebildet und weist eine Verstellpumpe sowie mehrere parallelgeschaltete Verstellmotoren auf, die hinsichtlich ihres Schluckvolumens in Abhängigkeit vom Systemdruck im Leitungskreislauf und von der Drehzahl der Verstellpumpe gemeinsam geregelt werden. Das Drehzahlsignal ist ein von einem sog. DA-Regelventil erzeugtes Drucksignal, mit dem über entsprechende Signalleitungen die aus einzelnen, den Verstellmotoren jeweils zugeordneten Regeleinrichtungen bestehende Regelvorrichtung sowie eine Regeleinrichtung der Verstellpumpe derart angesteuert werden, daß mit wachsender Drehzahl das Schluckvolumen der Verstellmotoren abnimmt und das Fördervolumen der Verstellpumpe zunimmt. Das DA-Regelventil ist an eine Hilfspumpe angeschlossen, die mit der Drehzahl der Verstellpumpe umläuft.

Der von der Verstellpumpe geförderte Volumenstrom nimmt den Weg des geringsten Widerstandes und wird dementsprechend von den Verstellmotoren in umgekehrtem Verhältnis zu dem von ihnen im Lastbetrieb jeweils aufgebrachten Antriebsmoment aufgenommen. Es besteht somit eine Differentialwirkung, die jedoch bei durchdrehenden Antriebsrädern mittels einer Antischlupfregelung aufgehoben wird. Diese Antischlupfregelung berücksichtigt die individuelle Belastung der Verstellmotoren, indem sie die Drehzahl sämtlicher Antriebsräder mißt, in einem elektronischen Steuergerät vergleicht und bei Überschreiten einer vorgegebenen Drehzahldifferenz den Verstellmotor des jeweils schneller drehenden Antriebsrades auf ein geringeres Schluckvolumen zurückschwenkt, indem sie über ein jeweils zugeordnetes Schaltventil die jeweilige Regeleinrichtung mit einem höheren Steuerdruck übersteuert. Folglich ist das vom zurückgeschwenkten Verstellmotor übertragbare Antriebsmoment und damit der Schlupf des zugeordneten Antriebsrades im Extremfall bis auf Null verringert.

Die Antischlupfregelung ist weiterhin dazu ausgebildet, im Schubbetrieb des hydrostatischen Getriebes durch entsprechende Ansteuerung sämtlicher Schaltventile die Drucksignale in den Signalleitungen abzuschwächen und damit auf diese Weise das Schluckvolumen und damit das Bremsmoment jedes Verstellmotors zu vergrößern.

Es ist Aufgabe der Erfindung, ein hydrostatisches Getriebe ähnlich des genannten Standes der Technik so weiterzubilden, daß es im Schubbetrieb eine größere Bremswirkung aufweist und bei Verwendung mehrerer Verstellmotoren deren Schluckvolumen unter Berücksichtigung ihrer Belastung mit geringerem konstruktiven Aufwand individuell regelt.

Diese Aufgabe wird durch die im Anspruch 1 aufgeführten Merkmale gelöst.

Bei Druckabfall in Richtung Pumpe befindet sich das hydrostatische Getriebe im Schubbetrieb und bei Druckabfall in umgekehrter Richtung im Lastbetrieb. Dementsprechend wird im letzteren Betriebszustand das hydrostatische Getriebe geringer übersetzt und damit seine Abtriebsgeschwindigkeit erhöht. Im Schubbetrieb hingegen vergrößert sich das Übersetzungsverhältnis und damit die in diesem Betriebszustand erwünschte hydraulische Bremswirkung des hydrostatischen Getriebes. Die erfindungsgemäße Regelung des Schluckvolumens des Verstellmotors erfolgt in Abhängigkeit vom Druckabfall und damit von dem von der Pumpe geförderten Volumenstrom; infolgedessen werden in gleicher Weise wie im Stand der Technik die Drehzahl und das Fördervolumen der Pumpe berücksichtigt. Da außerdem bei einem mehrmotorigen Getriebe unterschiedliche Motorbelastungen unterschiedliche Druckabfälle hervorrufen, werden die einzelnen parallelgeschalteten Verstellmotoren unter Berücksichtigung ihrer Belastung individuell geregelt. Dadurch und durch die Ausbildung der Regelvorrichtung derart, daß sie jeden Verstellmotor im Lastbetrieb mit zunehmendem Druckabfall in Richtung kleineren Schluckvolumens verstellt, ergibt sich eine Antischlupfregelungsfunktion, jedoch ohne den konstruktiven Aufwand der aus dem Stand der Technik bekannten Antischlupfregelung.

Die Erfindung ist sowohl für ein hydrostatisches Getriebe mit geschlossenem als auch mit offenem Kreislauf anwendbar. Im letzteren Fall ist ein Bremsventil in dem zum Tank führenden Teil des Leitungskreislaufes anzuordnen. Die Pumpe kann entweder als Verstellpumpe oder als eine mit veränderlicher oder konstanter Drehzahl antreibbare Konstantpumpe ausgebildet sein.

Weitere Vorteile und Merkmale der Erfindung ergeben sich aus den verbleibenden Unteransprüchen.

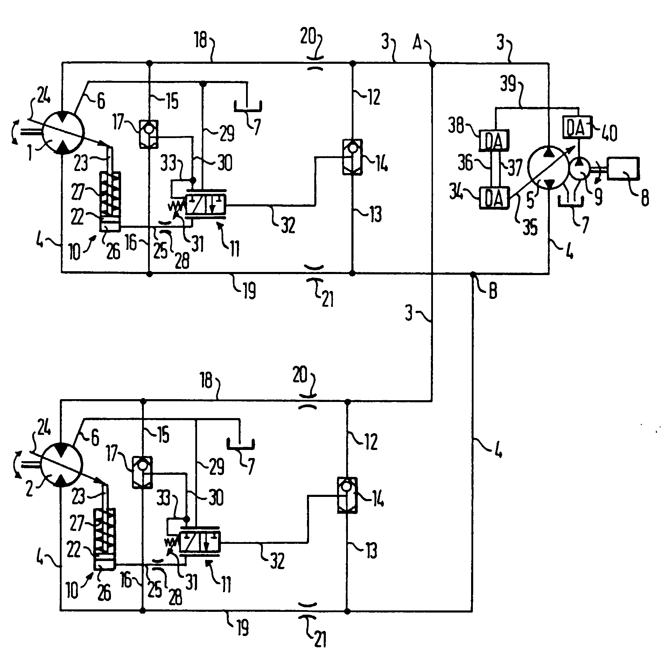

Nachstehend ist die Erfindung anhand eines Ausführungsbeispiels unter Bezugnahme auf den Schaltplan der einzigen Figur näher beschrieben.

Die Figur zeigt ein hydrostatisches Getriebe mit geschlossenem Leitungskreislauf als Fahrantrieb für ein Fahrzeug. Es umfaßt zwei Verstellmotoren 1,2, die jeweils zwei Förderrichtungen aufweisen, jeweils wenigstens ein nicht gezeigtes Antriebsrad des ebenfalls nicht gezeigten Fahrzeugs antreiben und über je zwei, den Leitungskreislauf bildende Druckmittelleitungen 3,4 mit je einer Verzweigung A bzw. B in Parallelschaltung an eine Verstellpumpe 5 angeschlossen sind. Das hydrostatische Getriebe umfaßt ferner eine Regelvorrichtung zur individuellen Regelung des Schluckvolumens der Verstellmotoren 1,2. Über je eine Leckölleitung 6 sind diese Verstellmotoren 1,2 an den Tank 7 angeschlossen.

Die Verstellpumpe 5 fördert in zwei Förderrichtungen; sie ist von einem Antriebsmotor 8, beispielsweise einem Dieselmotor veränderlicher Drehzahl, antreibbar und mittels einer eine Hilfspumpe 9 einschließenden sog. DA(drehzahlabhängigen)-Regelung in ihrem Fördervolumen regelbar. Eine solche DA-Regelung ist in der DE-A 40 16 518 beschrieben und weiter unten kurz umrissen. Die Verstellpumpe 5 und die Hilfspumpe 9 sind miteinander mechanisch gekoppelt und über entsprechende Leckölleitungen an den Tank 7 angeschlossen.

Die Regelvorrichtung umfaßt je eine jedem Verstellmotor 1,2 zugeordnete Meß- und Regeleinrichtung bestehend aus zwei Meßstrecken, einem Stellzylinder 10 und einem Regelventil 11. Beide Meß- und Regeleinrichtungen sind identisch; der Einfachheit halber ist nachstehend lediglich die dem Verstellmotor 1 zugeordnete Einrichtung beschrieben.

Von den zwischen dem Verstellmotor 1 und den Leitungsverzweigungen A bzw. B liegenden Abschnitten der Druckmittelleitungen 3,4 führt je eine erste Verbindungsleitung 12 bzw. 13 zu einem Wechselventil 14 und je eine zweite Verbindungsleitung 15 bzw. 16 zu einem Wechselventil 17. Die jeweils zwischen den Einmündungen der Verbindungsleitungen 12 und 15 bzw. 13 und 16 in die Druckmittelleitungen 3 bzw. 4 gelegenen Teilstrecken der letzteren sind mit den Bezugszeichen 18,19 bezeichnete Meßstrecken, in denen je eine Drosselstelle 20 bzw. 21 angeordnet ist. Die zweiten Verbindungsleitungen 15,16 münden näher zum Verstellmotor 1 als die ersten Verbindungsleitungen 12,13 in die jeweiligen Druckmittelleitungen ein.

Der Stellzylinder 10 ist ein einfachwirkender Zylinder mit einem Kolben 22, der über eine Kolbenstange 23 mit dem für die Verstellung des Schluckvolumens vorgesehenen Stellglied 24 des Verstellmotors 1 gekoppelt ist. Der Kolben 22 definiert mit seiner größeren, kreisförmigen Kolbenfläche einen an eine Stelldruckleitung 25 angeschlossenen Druckraum 26 und mit seiner kleineren, ringförmigen Kolbenfläche einen Federraum, in dem eine Spannfeder 27 angeordnet ist. Letztere beaufschlagt den Kolben 22 in Richtung Verringerung des Druckraums 26 und damit Vergrößerung des Schluckvolumens des Verstellmotors 1. In der Stelldruckleitung 25 ist eine Blende 28 angeordnet.

Das Regelventil 11 ist ein drosselndes 3/2-Wegeventil mit zwei Steueranschlüssen und je einem Anschluß an die Stelldruckleitung 25, an eine zur Leckölleitung 6 führende Entlastungsleitung 29 sowie an eine Versorgungsleitung 30, die zum Wechselventil 17 in den zweiten Verbindungsleitungen 15,16 führt. Das 3/2-Wegeventil 11 ist durch eine einstellbare Druckfeder 31 in der in der Figur gezeigten (rechten) Ausgangsstellung gehalten und durch einen ersten Druck p₁ gegen den Druck der Druckfeder 31 in Richtung einer (linken) Regelstellung ansteuerbar. Zu diesem Zweck verbindet eine erste Steuerleitung 32 das Wechselventil 14 mit dem in der Figur rechten Steuerraum des 3/2-Wegeventils 11, während dessen in der Figur linker Steuerraum zwecks Heranführung eines zweiten Druckes p₂ über eine zweite Steuerleitung 33 an die zum Wechselventil 17 führende Versorgungsleitung 30 angeschlossen ist. Beide Drücke p₁, p₂ stellen den im Betrieb des hydrostatischen Getriebes an der jeweiligen Drosselstelle 20 bzw. 21 auftretenden Druckabfall Δp dar.

In der Ausgangsstellung des 3/2-Wegeventils 11 ist der Anschluß an die Versorgungsleitung 30 gesperrt, während die beiden verbleibenden Anschlüsse miteinander verbunden sind. In der Regelstellung sind die Anschlüsse an die Stelldruckleitung 25 und die Versorgungsleitung 30 geöffnet, während der Anschluß an die Entlastungsleitung 29 gesperrt ist.

Die nicht näher gezeigte DA-Regelung der Verstellpumpe 5 umfaßt einen federzentrierten, doppeltwirkenden, gleichgängigen Stellzylinder 34, der mit dem Stellglied 35 der Verstellpumpe 5 gekoppelt ist. Die beiden Druckräume des Stellzylinders 34 sind über je eine Steuerdruckzweigleitung 36, 37 an ein Fahrtrichtungsventil 38 angeschlossen, von dem aus eine Steuerdruckleitung 39 zu einem Differenzdruckregelventil 40 mit vorgeschalteter Blende führt, welches an die Hilfspumpe 9 angeschlossen ist. In jeder Einstellung des Fahrtrichtungsventils und damit Wahl der Fahrtrichtung wird der entsprechende Druckraum des Stellzylinders mit einem der Drehzahl der Hilfspumpe 9 und damit der Verstellpumpe 5 proportionalen Steuerdruck beaufschlagt und in Richtung maximalen Fördervolumens ausgeschwenkt. Statt dieser DA-Regelungen können auch andere bekannte Regelungen (aber auch Steuerungen) eingesetzt werden, wie etwa die Druckregelung oder die Leistungsregelung, die das Fördervolumen der Verstellpumpe 5 in Abhängigkeit vom jeweils höheren Druck (Arbeitsdruck) in den Druckmittelleitungen 3,4 so einstellen, daß der Arbeitsdruck bzw. die Leistung der Verstellpumpe 5 konstant gehalten werden.

Die Funktion des erfindungsgemäßen hydrostatischen Getriebes ist wie folgt: Bei Leerlaufdrehzahl des Antriebsmotors 8 sind die Verstellpumpe 5 auf minimales Fördervolumen und die Verstellmotoren 1,2 entsprechend der in der Figur gezeigten Stellung der Stellzylinder 10 sowie der Regelventile 11 auf maximales Schluckvolumen eingestellt.

Die Verstellpumpe 5 wird mit zunehmender Drehzahl des Antriebsmotors 8 kontinuierlich auf größeres Fördervolumen ausgeschwenkt und fördert einen entsprechenden, die Verstellmotoren 1,2 in Drehung versetzenden, druckbeladenen Volumenstrom in den Druckmittelleitungen 3 - beispielsweise bei gewählter Fahrtrichtung "vorwärts" -. Der Rückfluß des Volumenstroms zur Verstellpumpe 5 erfolgt nahezu drucklos über die Druckmittelleitungen 4. Das Fahrzeug fährt; sein hydrostatisches Getriebe befindet sich im Primärverstellungsbereich, in welchem die Änderung seines Übersetzungsverhältnisses lediglich durch die Verstellung der Verstellpumpe 5 erfolgt.

An den Drosselstellen 20 in den Druckmittelleitungen 3 entsteht jeweils ein dem jeweiligen druckbeladenen Volumenstrom proportional er Druckabfall (Druckdifferenz) Δp. Der in Strömungsrichtung hinter den Drosselstellen 20 herrschende Druck p₂ ist der Verbraucherdruck, der dem Antriebsmoment des jeweiligen Verstellmotors 1 bzw. 2 entspricht. Über die zweiten Verbindungsleitungen 15, die Wechselventile 17, die Versorgungsleitungen 30 und die zweiten Steuerleitungen 33 werden die Regelventile 11 mit diesem Verbraucherdruck p₂ angesteuert, so daß sie in ihrer Ausgangsstellung verbleiben. Der in Strömungsrichtung vor den Drosselstellen 20 herrschende Druck p₁ ist gleich dem Verbraucherdruck p₂ plus dem Druckabfall (Druckdifferenz) Δp. Dieser Druck p₁ beaufschlagt über die ersten Verbindungsleitungen 12, die Wechselventile 14 und die ersten Steuerleitungen 32 die Regelventile 11 in Richtung Regelstellung.

Wenn die Verstellpumpe 5 auf nahezu maximales Fördervolumen ausgeschwenkt ist, liefert sie einen Volumenstrom, der bei gleichmäßiger Aufteilung an der Abzweigung A an jeder Drossel 20 eine Druckdifferenz Δp erzeugt, die den eingestellten Druck der jeweiligen Druckfeder 31 übersteigt und das jeweils zugeordnete Regelventil 11 in seine Regelstellung verschiebt, in der der Verbraucherdruck p₂ über die jeweilige zweite Verbindungsleitung 15, das Wechselventil 17, die Versorgungsleitung 30 und die Stelldruckleitung 25 dem Druckraum 26 des jeweiligen Stellzylinders 10 zugeführt wird und die Verstellmotoren 1,2 in Richtung kleineren Schluckvolumens zurückschwenkt. Das hydrostatische Getriebe befindet sich im Sekundärverstellungsbereich. Mit zunehmender Drehzahl des Antriebsmotors 8 und damit des von der Verstellpumpe 5 gelieferten Volumenstroms wird das Übersetzungsverhältnis des hydrostatischen Getriebes durch weiteres Zurückschwenken der Verstellmotoren 1,2 bis auf ihr minimales Schluckvolumen verringert.

Solange die Haftreibungsgrenze zwischen Antriebsrädern und Fahrbahn nicht überschritten wird, drehen bei Geradeausfahrt sämtliche Antriebsräder mit gleicher Drehzahl, so daß sich der von der Verstellpumpe 5 gelieferte Volumenstrom an der Abzweigung A (bei Vorwärtsfahrt) im gleichen Verhältnis aufteilt. Dementsprechend sind die Verstellmotoren 1,2 auf gleiche Schluckvolumina eingestellt.

Bei Kurvenfahrt ändern sich die Größenverhältnisse der beiden Volumenströme und damit die Druckdifferenzen Δp an den Drosseln 20 entsprechend dem Drehzahlunterschied zwischen dem kurvenäußeren und dem kurveninneren Antriebsrad. Dementsprechend wird der das kurvenäußere Antriebsrad antreibende, also schneller drehende Verstellmotor auf kleineres Schluckvolumen und der das kurveninnere Antriebsrad antreibende, also langsamer drehende Verstellmotor auf größeres Schluckvolumen verstellt. Diese Verstellung erfolgt innerhalb des Verstellbereichs beider Verstellmotoren so lange, bis beide gleiche Volumenströme aufnehmen. Falls jedoch beide Verstellmotoren 1,2 entweder auf minimales oder auf maximales Schluckvolumen eingestellt sind, erfolgt keine Verstellung ihrer Schluckvolumina.

Wenn bei Geradeaus- oder Kurvenfahrt auf glatter Fahrbahn eines der Antriebsräder die Haftreibungsgrenze überschreitet und dementsprechend durchdreht, nimmt der zugeordnete Verstellmotor, beispielsweise der Motor 1, den gesamten, von der Verstellpumpe 5 gelieferten Volumenstrom auf und wird durch die entsprechend große Druckdifferenz Δp an der Drosselstelle 20 auf Null-Schluckvolumen zurückgeschwenkt. Der Verstellmotor 1 gibt dementsprechend kein Drehmoment mehr ab, so daß das ihm zugeordnete Antriebsrad nicht mehr durchdreht, sondern mit einer der Geschwindigkeit des Fahrzeugs entsprechenden Drehzahl dreht (Antischlupfregelung).

Während des Durchdrehens des vom Verstellmotor 1 angetriebenen Antriebsrades erhält der Verstellmotor 2 keinen Volumenstrom und wird somit auf maximales Schluckvolumen ausgeschwenkt, so daß er sein maximales Antriebsmoment abgibt. Auf diese Weise wird einerseits erreicht, daß größere Fahrwiderstandsunterschiede ausgeglichen werden können und gleichzeitig weder eines der Antriebsräder durchdreht noch zum Stillstand kommt.

Wenn das hydrostatische Getriebe vom Last- in den Schubbetrieb wechselt, wenn also die Verstellmotoren 1,2 die Verstellpumpe 5 antreiben und der druckbeladene Volumenstrom von den Druckmittelleitungen 3 zu den Druckmittelleitungen 4 wechselt, wirken die Druckdifferenzen Δp an den Drosselstellen 20 gleichsinnig mit den Druckfedern 31 auf die Regelventile 11 und halten diese in der gezeigten Ausgangsstellung, in der die Verstellmotoren 1,2 durch die Spannfedern 27 in den Stellzylindern 10 auf maximales Fördervolumen ausgeschwenkt sind. Auf diese Weise wird die Bremsleistung des Antriebsmotors 8 voll ausgenutzt.

Die vorstehende Beschreibung gilt sinngemäß auch für die Rückwärtsfahrt, bei der die Verstellpumpe 5 durch die Druckmittelleitungen 4 fördert und der Rücklauf über die Druckmittelleitungen 3 erfolgt.

## Patentansprüche

1. Hydrostatisches Getriebe, insbesondere für einen Fahrantrieb, mit einem Leitungskreislauf (3,4), in dem wenigstens eine Pumpe (5) und ein Verstellmotor oder mehrere parallelgeschaltete Verstellmotoren (1,2) mit einer Regelvorrichtung (10,11,18-21) zum Regeln des Schluckvolumens des oder jeden Verstellmotors angeordnet sind, bein dem die Regelvorrichtung (10,11,18-21) an je eine Teilstrecke (18 und 19) des Leitungskreislaufs (3,4) sowohl vor als auch nach dem oder jedem Verstellmotor (1,2) angeschlossen sowie zum Messen des Druckabfalls (Δp) auf der mit dem jeweils höheren Druck belasteten Teilstrecke (18 bzw. 19) vor bzw. nach dem oder jedem Verstellmotor (1,2) ausgebildet ist und diesen Verstellmotor (1,2) mit Zunahme des gemessenen Druckabfalls (Δp) in Richtung der Pumpe (5) auf größeres Schluckvolumen und mit zunehmendem Druckabfall (Δp) in umgekehrter Richtung auf kleineres Schluckvolumen regelt.

2. Hydrostatisches Getriebe nach Anspruch 1,
dadurch gekennzeichnet,
daß in jeder Teilstrecke (18,19) des Leitungskreislaufs (3,4) eine Drosselstelle (20,21) zum Messen des Druckabfalls (Δp) angeordnet ist.

3. Hydrostatisches Getriebe nach Anspruch 2,
dadurch gekennzeichnet,
daß die Regelvorrichtung (10,11,18-21) eine bzw. je eine dem oder jedem Verstellmotor (1,2) zugeordnete Meß- und Regeleinrichtung (10,11,18,20; 10,11,19,21) umfaßt, die einen zwecks Verstellung des Schluckvolumens des Verstellmotors (1,2) mit dessen Stellglied (24) gekoppelten, mit einem Stelldruck beaufschlagbaren Stellzylinder (10) und ein Regelventil (11) zur Regelung der Stelldruckbeaufschlagung des Stellzylinders (10) aufweist, daß der Druckabfall (Δp) mit einem ersten Druck (p₁) und einem zweiten Druck (p₂) über eine erste und eine zweite Steuerleitung (32,33) von der jeweiligen Teilstrecke (18 bzw. 19) des Leitungskreislaufs (3,4) abgenommen wird und der erste Druck (p₁) in dem der Pumpe (5) näheren Teil der jeweiligen Teilstrecke (18 bzw. 19) das Regelventil (11) über die erste Steuerleitung (32) entgegen dem zweiten Druck (p₂) in der zweiten Steuerleitung (33) in Richtung einer Regelstellung beaufschlagt, in der es die Stelldruckbeaufschlagung des Stellzylinders (10) in Richtung kleineren Schluckvolumens des Verstellmotors (1,2) regelt.

4. Hydrostatisches Getriebe nach Anspruch 3,
dadurch gekennzeichnet,
daß das bzw. jedes Regelventil (11) durch eine Druckfeder (31) entgegen dem ersten Druck (p₁) beaufschlagt ist.

5. Fahrantrieb mit einem von einem Antriebsmotor antreibbaren hydrostatischen Getriebe nach wenigstens einem vorhergehenden Anspruch,
dadurch gekennzeichnet,
daß die Pumpe (5) als Verstellpumpe mit einer zugeordneten Regeleinrichtung (34,36,40) zur Verstellung ihres Fördervolumens ausgebildet ist.

## Claims

1. Hydrostatic transmission, in particular for a travel drive, having a line circuit (3, 4) in which there are arranged at least a pump (5) and a variable displacement motor or a plurality of parallel-connected variable displacement motors (1, 2) with a regulation device (10, 11, 18-21) for regulating the swept volume of the or each variable displacement motor,
in which,
the regulation device (10, 11, 18-21) is connected to respective part lengths (18 and 19) of the line circuit (3, 4) both upstream and also downstream of the or each variable displacement motor (1, 2) and is formed for measuring the pressure drop (Δp) at the part length (18 or 19) subjected in each case to the higher pressure upstream or downstream of the or each variable displacement motor (1, 2), and regulates this variable displacement motor (1, 2) to greater swept volume with increase of the measured pressure drop (Δp) in the direction of the pump (5) and towards lesser swept volume with increasing pressure drop (Δp) in the opposite direction.

2. Hydrostatic transmission according to claim 1,
characterised in that,
in each part length (18, 19) of the line circuit (3, 4) there is arranged a choke point (20, 21) for the purpose of measurement of the pressure drop (Δp).

3. Hydrostatic transmission according to claim 2,
characterised in that,
the regulation device (10, 11, 18-21) includes a or a respective measurement and regulation device (10, 11, 18, 20; 10, 11, 19, 21) associated with the or each variable displacement motor (1, 2), which measurement and regulation device has a setting cylinder (10), which can be acted upon by a setting pressure, coupled with the setting member (24) of the variable displacement motor (1, 2) for the purpose of adjustment of the swept volume of the variable displacement motor (1, 2), and has a regulation valve (11) for regulating the setting pressure action on the setting cylinder (10),
in that the pressure drop (Δp) is taken from the respective part length (18 or 19) of the line circuit (3, 4) with a first pressure (p₁) and a second pressure (p₂) via a first and a second control line (32, 33), and the first pressure (p₁) in the portion of the part length (18 or 19) concerned nearer to the pump (5) acts upon the regulation valve (11) via the first control line (32) against the second pressure (p₂) in the second control line (33) in the direction of a regulation position in which it regulates the setting pressure action on the setting cylinder (10) in the direction of lesser swept volume of the variable displacement motor (1, 2).

4. Hydrostatic transmission according to claim 3,
characterised in that,
the or each regulation valve (11) is acted upon by means of a pressure spring (31) against the first pressure (p₁).

5. Travel drive having a hydrostatic transmission in accordance with any preceding claim, drivable by a drive motor,
characterised in that,
the pump (5) is formed as a variable displacement pump having an associated regulation device (34, 36, 40) for adjusting its displacement.

## Revendications

1. Transmission hydrostatique, en particulier pour un mécanisme d'entraînement, comportant un circuit de conduite (3, 4), dans lequel sont montés au moins une pompe (5) et un servo-moteur ou plusieurs servo-moteurs (1, 2) montés en parallèle avec un dispositif de régulation (10, 11, 18 à 21) pour la régulation du volume du ou de chaque servo-moteur, dans laquelle le dispositif de régulation (10, 11, 18 à 21) est raccordé à un tronçon (18 et 19) du circuit de conduite (3, 4) ainsi que devant ou après le ou chaque servo-moteur (1, 2) et est conçu pour la mesure de la chute de pression Δp sur le tronçon (18 ou 19), recevant la pression plus élevée, devant ou après le ou chaque servo-moteur (1, 2) et règle ce servo-moteur (1, 2) avec l'augmentation de la chute de pression Δp mesurée en direction de la pompe (5), sur un plus grand volume et avec diminution de la chute de pression Δp, dans le sens inverse, sur un plus petit volume.

2. Transmission hydrostatique selon la revendication 1, caractérisée en ce que dans chaque tronçon (18, 19) du circuit de conduite (3, 4) est prévu un point d'étranglement (20, 21) pour la mesure de la chute de pression Δp.

3. Transmission hydrostatique selon la revendication 2, caractérisée en ce que le dispositif de régulation (10, 11, 18 à 21) comporte un dispositif de mesure et de régulation (10, 11, 18, 20 ; 10, 11, 19, 21) ou un tel dispositif associé au ou à chaque servo-moteur (1, 2), qui comporte, pour le réglage du volume du servo-moteur (1, 2), un cylindre de réglage (10) couplé à son organe de réglage (24), alimenté avec une pression de réglage ainsi qu'une soupape de régulation (11) pour la régulation de l'alimentation en pression de réglage du cylindre de réglage (10), en ce que la chute de pression Δp est prélevée avec une première pression (p₁) et une deuxième pression p₂, par une première et une deuxième conduite de commande (32, 33), du tronçon (18 ou 19) respectif du circuit de conduite (3, 4) et la première pression (p₁) dans la partie du tronçon (18 ou 19) respectif, plus proche de la pompe (5), sollicite la soupape de régulation (11), par la première conduite de commande (32) à l'encontre de la deuxième pression (p₂) dans la deuxième conduite de commande (33), en direction d'une position de régulation, dans laquelle elle règle l'alimentation en pression de réglage du cylindre de réglage (10) en direction d'un plus petit volume du servo-moteur (1, 2).

4. Transmission hydrostatique selon la revendication 3, caractérisée en ce que la ou chaque soupape de régulation (11) est sollicitée par un ressort de pression (31) à l'encontre de la première pression (p₁).

5. Mécanisme d'entraînement avec une transmission hydrostatique, pouvant être entraînée par un moteur d'entraînement selon au moins une revendication précédente, caractérisé en ce que la pompe (5) est conformée en pompe de réglage avec un dispositif de régulation (34, 36, 40) associé en vue du réglage de son volume de refoulement.
